# EUROPÄISCHE PATENTANMELDUNG

(11) **EP 0 795 498 A1**
(43) Veröffentlichungstag der Anmeldung: **17.09.1997**
(21) Anmeldenummer: 97810134.3
(22) Anmeldetag: 10.03.1997
(51) Int. Cl.: B65G 47/54

(54) **Einrichtung zum transport von auf einer Förderbahn abstellbaren Körpern**

(30) Priorität: 15.03.1996 CH 685/96
(71) Anmelder: GRAPHA-HOLDING AG, 6052 Hergiswil (CH)
(72) Erfinder: Maier, Wilhelm, 5430 Wettingen (CH); Rohner, Thomas, 8037 Zürich (CG)

(57) **Zusammenfassung**

Eine Einrichtung (1) zum Transport von Paketen oder Gegenständen (3) auf einer Förderbahn (2) besitzt eine mit Auslagen (5) ausgebildete Entnahmestelle (4) zum seitlichen Wegführen der Pakete und mehrere, in der Förderbahn (2) nebeneinander angeordnete, einen Förderabschnitt bildende Tragrollen (9), zwischen denen Zugmittel (20) um rechtwinklig angeordnete Drehachsen (11) aufweisende Förderelemente (12) steuerbar umlaufen, welche Förderelemente (12) eine kreisrunde, durch einen sehnenförmigen Abschnitt (13) unterbrochene Form aufweisen.

## Beschreibung

Die Erfindung betrifft eine Einrichtung zum Transport von auf einer Förderbahn abstellbaren Körpern nach dem Oberbegriff des Patentanspruches 1.

Solche Einrichtungen sind beispielsweise zum Transport von losen Teilen in Behältern oder Einzelteilen bekannt, die auf dem Förderweg an einer Stelle von der Förderbahn genommen, einem bestimmten Ziel zugeführt werden. Die Entnahmestelle kann dann auch als Weichenanordnung bezeichnet werden.

Aufgabe der vorliegenden Erfindung ist die Ausgestaltung einer Entnahmestelle bzw. Verteilstelle entlang einer Förderbahn, die es erlaubt, transportierte Körper zuverlässig seitlich wegzufördern und die auf einfache Art benutzt werden kann.

Erfindungsgemäss wird diese Aufgabe gemäss dem kennzeichnenden Teil von Patentanspruch 1 gelöst.

Eine solche Ausführungsform nach dem Erfindungsgegenstand lässt sich mit einfachen Mitteln bewerkstelligen und steuern und die den zu transportierenden Körpern zugewandten Trums der Zugmittel bilden eine ebene Förderfläche.

Vorzugsweise sind die Zugmittel als endlos umlaufende Flach-, Zahn- oder Keilriemen ausgebildet; auch Gelenkketten versehen mit den bekannten Einschränkungen den Dienst.

Im Fall von Flach-, Zahn- oder Keilriemen ist es günstig, wenn diese an ihrer förderwirksamen Oberfläche resp. Oberseite glatt, rauh, profiliert oder haftend ausgebildet sind, sodass ein bedarfsfalls unterschiedlicher Reibungseffekt gegenüber den zu transportierenden Körpern erzeugt werden kann.

Zweckmässigerweise bilden die den zu transportierenden Körpern zugewandten Trums der Zugmittel durch ihre parallele Anordnungsweise eine ebene Förderfläche, die durch entsprechende Abstände der Trums quer zur Förderrichtung unterbrochen sein kann.

Um die Richtungsänderung der transportierten Körper an der Entnahmestelle begünstigen zu können, bilden die Tragrollenanordnung und die Drehachsen der Förderelemente etwa parallel übereinanderliegende Horizontalebenen, sodass eine optimale Angriffsposition der Trums an den Körpern erzielt werden kann.

Um durch die Entnahmestelle, von denen mehrere an der Förderbahn vorgesehen und auf beide Seiten wirksam sein können, keine Leistungseinbusse hinnehmen zu müssen, entspricht die Umfangsgeschwindigkeit der Tragrollen der Fördergeschwindigkeit der Förderbahn auf.

Zweckmässig erweist es sich, wenn die Wellen der Förderelemente bzw. der umlaufenden Zugmittel antriebsverbunden sind, so, dass sich eine einfache Antriebsanordnung realisieren lässt.

Anschliessend wird die Erfindung unter Bezugnahme auf die Zeichnung, auf die bezüglich aller in der Beschreibung nicht näher erwähnten Einzelheiten verwiesen wird, anhand eines Ausführungsbeispiels erläutert. Es zeigen:
- Fig. 1: einen Schnitt durch eine Einrichtung gemäss I ÷ I in Fig. 2,
- Fig. 2: eine Seitenansicht gemäss Fig. 1 und
- Fig. 3: eine Draufsicht nach den Fig. 1 und 2.

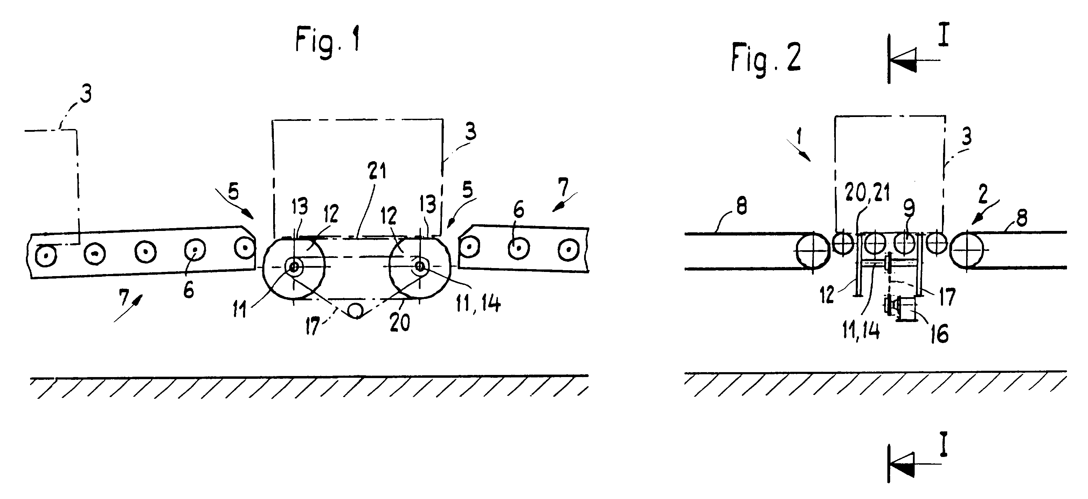

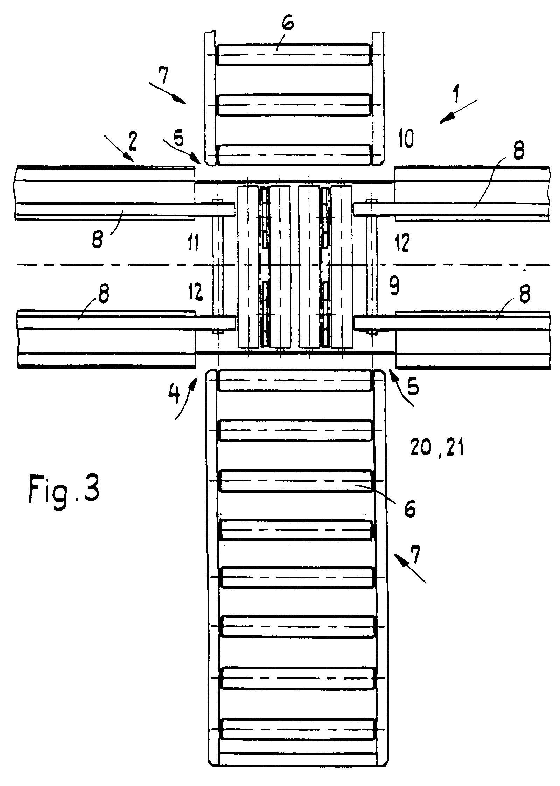

Die Fig. 1 bis 3 zeigen eine Einrichtung 1 zum Transport von auf einer Förderbahn 2 abstellbaren Körpern 3, die an einer Entnahmestelle 4 beidseits der Förderbahn 2 in einem rechten Winkel förderwirksame Auslagen 5 aufweist. An diese Auslagen 5 schliesst jeweils eine aus beabstandeten Förderrollen 6 gebildete, in Förderrichtung eine leichte Neigung aufweisende Rollenbahn 7 an.
Die Förderbahn 2 besteht aus wenigstens zwei parallel nebeneinander um Umlenkrollen laufenden endlosen Bändern 8, die eine Auflagefläche bilden, und ist an der Entnahmestelle 4 durch einen Zwischenraum unterbrochen. In diesem Zwischenraum ist eine aus in Förderrichtung der Förderbahn 2 nebeneinandergereihten Tragrollen 9 gebildete Rollenanordnung vorgesehen, die mit der Förderbahn 2 einen koplanaren Förderabschnitt bildet. Zwischen den Tragrollen 9, die frei drehbar oder antreibbar in einem Gestell 10 gelagert sind, sind um zwei rechtwinklig zu den Drehachsen der Tragrollen 9 angeordnete, parallele Achsen 11 antreibbare, paarweise radförmige Förderelemente 12 mit umlaufenden Zugmitteln 20 vorgesehen, wobei die Förderelemente 12 eine kreisrunde, durch einen sehnenartigen Abschnitt 13 unterbrochene Form aufweisen.
Die Fig. 1 bis 3 vermitteln die Förderelemente 12 bzw. die Zugmittel 20 in Ruhestellung, in welcher der sehnenartige Abschnitt 13 der Förderelemente 12 nach oben gerichtet ist, derart, dass er die auf den Tragrollen 9 über die Entnahmestelle 4 hinweggeführten Körper 3 resp. Behälter nicht beeinflusst, d.h. der sehnenartige Abschnitt 13 liegt idealerweise unterhalb der durch die Tragrollenoberseite gebildeten Ebene. Soll seitlich von der Förderbahn 2 entnommen werden, dann werden die Förderelemente 12 bzw. die Zugmittel 20 durch einen Steuerbefehl in Drehung versetzt, so dass die an der Entnahmestelle 4 erscheinenden Körper 3 an ihrer Standfläche von den durch die kreisrunden Bereiche der Förderelemente 12 gebildeten angehobenen Trums der Zugmittel 20 von der Förderbahn 2 abgehoben und zur Seite befördert werden.
Im dargestellten Ausführungsbeispiel sind zwei eine parallele Ebene zu den Tragrollen 9 bildenden Wellen 14 mit jeweils zwei, um an den Wellen 14 befestigte Förderelemente 12 umlaufende Zugmittel 20 vorgesehen, welche zwischen jeweils der ersten und zweiten sowie dritten und vierten Tragrolle 9 angeordnet sind.
An den Wellen 14 sind zwischen den Förderelementen 12 Riemenpullis oder Kettenräder 15 befestigt, die von einem mit einem Antriebsmotor 16 verbundenen Zugorgan 17 teilweise umgeben sind.
Um auf beide Seiten der Förderbahn 2 die transportierten Körper 3 verteilen zu können, ist der Antriebsmotor 16 mit einer Steuerung verbunden.
Die die Rollenanordnung bildenden Tragrollen 9 können gegenüber der Förderbahn 2 mit einer Verzögerung der Umfangsgeschwindigkeit gesteuert werden, die beispielsweise über eine durch die ankommenden Körper 3 beeinflussbare Lichtschranke oder Sensoren eingeleitet wird.
Die Figuren 1 bis 3 zeigen weiterhin in strichpunktierten Linien dargestellte Zugmittel 20 aus endlos um die Förderelemente 12 umlaufende Riemen oder Bänder.
Das den zu transportierenden Körpern oder Gegenständen zugewandte obere Trum 21 ändert seine Lage in senkrechter Richtung durch den sehnenartigen Abschnitt 13 am Umfang der Förderelemente 12, der bei jeder Umdrehung der Förderelemente 12 eine Absenkung der Förderfläche oder der Trums bewirkt. Selbstverständlich könnte zwischen jedem sich bildenden Tragrollenpaar 9, 9 eine Anordnung aus Zugmitteln 20 zur Querförderung der Körper vorgesehen werden. Die Förderwirksamkeit der Oberfläche der umlaufenden Bänder oder Riemen kann durch Aenderung des Rauheitsgrades oder durch eine Profilierung geändert werden.

## Patentansprüche

1. Einrichtung zum Transport von auf einer Förderbahn (2) abstellbaren Körpern (3), die an einer Entnahmestelle (4) eine wenigstens einseitig der Förderbahn (2) angeordnete und mit dieser etwa in einem rechten Winkel förderwirksam kommunizierende Auslage (5) aufweist, wobei die Entnahmestelle (4) eine einen wenigstens annähernd koplanaren Förderabschnitt der Förderbahn (2) bildenden, aus mehreren nebeneinander angeordneten, antreibbaren Tragrollen (9) bestehende Rollenanordnung und zwischen den Tragrollen (9) um wenigstens eine rechtwinklig angeordnete Drehachse (11) antreibbare Förderelemente (12) aufweist, deren kreisrunde, die Förderbahn (2) überragende Tragfläche durch einen sehnenartigen Abschnitt (13) unterbrochen ist, dadurch gekennzeichnet, dass jeweils wenigstens zwei zwischen Tragrollen (9) sich an Wellen (14) resp. Drehachsen (11) gegenüberliegende Förderelemente (12) durch ein oder mehrere förderwirksame Trums (21) bildende umlaufende Zugmittel (20) antreibbar verbunden sind.

2. Einrichtung nach Anspruch 1, dadurch gekennzeichnet, dass die den zu transportierenden Körpern (2) zugewandten Trums (21) mehrerer Zugmittel (20) eine etwa ebene Förderfläche bilden.

3. Einrichtung nach Anspruch 1 und/oder 2, dadurch gekennzeichnet, dass die Zugmittel (20) als Flach-, Zahn- oder Keilriemen ausgebildet sind.

4. Einrichtung nach einem der vorhergehenden Ansprüche 1 - 3, dadurch gekennzeichnet, dass die Förderfläche resp. die förderwirksame Oberfläche der Zugmittel (20) glatt, profiliert und/oder haftend ausgebildet ist.

5. Einrichtung nach einem der Ansprüche 1 - 4, dadurch gekennzeichnet, dass die sehnenartigen Abschnitte (13) in der Ausserbetriebslage der Förderelemente (12) gemeinsam unterhalb der durch die Tragrollen (9) gebildeten Förderebene nach oben gerichtet sind.

6. Einrichtung nach Anspruch 5, dadurch gekennzeichnet, dass die Wellen (14) wenigstens zwei auf die förderwirksame Länge der Rollenanordnung verteilt angeordnete Förderelemente (12) aufweist.

7. Einrichtung nach Anspruch 6, dadurch gekennzeichnet, dass die Tragrollen (9) und die Drehachsen (11) bzw. Wellen (14) der Förderelemente (12) parallel übereianderliegende Horizontalebenen bilden.

8. Einrichtung nach Anspruch 7, dadurch gekennzeichnet, dass die Umfangsgeschwindigkeit der Tragrollen (9) der Fördergeschwindigkeit der Förderbahn (2) entspricht.

9. Einrichtung nach Anspruch 8, dadurch gekennzeichnet, dass die Förderelemente (12) reversibel antreibbar ausgebildet sind.

10. Einrichtung nach einem der Ansprüche 1 bis 9, dadurch gekennzeichnet, dass die Wellen (14) der Förderelemente (12) mit einem Motor (16) antriebsverbunden sind.
